# EUROPÄISCHE PATENTSCHRIFT

(11) **EP 4 413 328 B1**
(45) Veröffentlichungstag und Bekanntmachung des Hinweises auf die Patenterteilung: **09.04.2025**
(21) Anmeldenummer: 22728034.4
(22) Anmeldetag: 28.04.2022
(51) Int. Cl.: G01D 3/02

(54) **VERFAHREN ZUR OFFSET-KOMPENSATION VON SENSORSIGNALEN, OFFSETKOMPENSATIONSVORRICHTUNG UND SENSORVORRICHTUNG**
METHOD FOR OFFSET COMPENSATION FOR SENSOR SIGNALS, OFFSET COMPENSATION DEVICE AND SENSOR DEVICE
PROCÉDÉ DE COMPENSATION DE DÉCALAGE POUR SIGNAUX DE CAPTEUR, DISPOSITIF DE COMPENSATION DE DÉCALAGE ET DISPOSITIF DE CAPTEUR

(30) Priorität: 07.10.2021 DE 102021211337
(43) Veröffentlichungstag der Anmeldung: 14.08.2024
(73) Patentinhaber: Continental Automotive Technologies GmbH, 30175 Hannover (DE)
(72) Erfinder: KNOBLOCH, Anselm, 30175 Hannover (DE); MICHEL, Frank, 30175 Hannover (DE)
(74) Vertreter: Continental Corporation
(86) Internationale Anmeldenummer: PCT/DE2022/200080
(87) Internationale Veröffentlichungsnummer: WO 2023/057013

(56) Entgegenhaltungen:
- DE-A1- 19 537 361
- US-A- 5 296 855
- US-A- 5 808 822
- US-B1- 7 369 637

## Beschreibung

Die Erfindung betrifft ein Verfahren zur Offset-Kompensation von Sensorsignalen gemäß dem Oberbegriff von Anspruch 1, eine Offsetkompensationsvorrichtung gemäß Anspruch 7, eine Sensorvorrichtung nach Anspruch 8.

Diese Erfindung befasst sich mit der Analyse und der Korrektur von fehlerbehafteten Signalen von Sensoren, insbesondere Raddrehzahlsensoren (RDS) in elektronischen Bremssystemen. Signale von RDS werden in Form von Strompegelübergängen oder definierten Strompulsen auf die positive und negative Anschlussklemme der Spannungsversorgung der RDS moduliert.

RDS Signale sind im Wesentlichen zwei Kategorien von Fehlerursachen ausgesetzt. Sensorinternen Fehlern (also Fehler am Sensorelement selbst) liegen meist elektrische oder mechanische Einwirkungen auf das Sensorelement zu Grunde. Defekte Sensorelemente können unmittelbar ein fehlerbehaftetes RDS-Signal verursachen. Fehler im Übertragungskanal des RDS-Signals (insbesondere verursacht durch Umwelteinflüsse, Alterung, mechanische Störungen, etc. und der Kanalisolation), können ebenfalls unmittelbar ein fehlerbehaftetes RDS-Signal verursachen.

Die Aufbereitung (Erfassung und Verarbeitung) der RDS Signale erfolgt üblicherweise von einer analogen Signalschnittstelle, welche das elektrische Bindeglied zwischen RDS und einem Mikrocontroller (MCU) darstellt. Dieser Signalschnittstelle obliegt die Sicherstellung der Integrität der Signalübertragung zwischen RDS und MCU. Hierzu werden innerhalb der analogen Signalschnittstelle besondere Maßnahmen realisiert, um den Zustand des RDS Übertragungskanals zu vermessen.

Bekannte Technologien zur Überprüfung des RDS Übertragungskanals können hierbei in zwei grundlegend verschiedene Messmethoden unterteilt werden. Invasive Messmethoden überführen den Übertragungskanal zwischen RDS und analoger Signalschnittstelle während des Messvorgangs in einen definierten, möglichst störfreien Zustand. Dies erfordert die Entkopplung der Signalübertragung zwischen RDS und Signalschnittstelle. Die Vermessung der elektrischen Parameter des Übertragungskanals erfolgt anschließend unter bekannten äußeren elektrischen Bedingungen. Nichtinvasive Messmethoden erfolgen durch eine Signalanalyse des RDS-Signals selbst. Diese ermöglicht es Rückschlüsse auf den Zustand des Signalkanals oder den Zustand des RDS selbst führen zu können.

Fehlerbilder äußern sich durch eine Verschiebung (Offset) und/oder zu einer Stauchung (Dämpfung, Attenuation) der ursprünglichen RDS-Signalform. Zur frühzeitigen Erkennung des fehlerhaften Zustands muss die Signalschnittstelle eine Messeinrichtung zur Verfügung stellen, welche die signalführenden Knoten auf Ursachen von Signalfehlern untersucht. Während des Messzeitraums können die Sensoren je nach Messtechnologie nicht betrieben werden, weshalb die Messung außerhalb von sicherheitskritischen Zeiträumen erfolgt. Bei Fahrzeugen bedeutet dies gewöhnlich, dass der Messvorgang unmittelbar nach der Zündungsbetätigung und im Stillstand des Fahrzeugs erfolgt.

Das Dokument US 5 296 855 A beschreibt ein Navigationssystem für ein Fahrzeug mit einem Lenkeinschlag-Geschwindigkeitssensor zum Erfassen der Lenkeinschlagsgeschwindigkeit des Fahrzeuges, wobei der Ausgang des Lenkeinschlag-Geschwindigkeitssensors, welcher die Lenkeinschlaggeschwindigkeit angibt, in Bezug auf eine konstante Schwelle verändert ist und der Lenkeinschlag-Geschwindigkeitssensor einen Versatzwert hat, der den Ausgang des Lenkeinschlag-Geschwindigkeitssensors während der Bewegung des Fahrzeuges in einer geraden Linie angibt. Der Sensor gibt dabei ein gepulstes Signal ab. Ferner ist eine Versatzrechnereinrichtung zum Integrieren der Ausgangsdaten des Lenkeinschlag-Geschwindigkeitssensors während einer Halteperiode des Fahrzeuges vorgesehen, um einen Versatzwert des Lenkeinschlag-Geschwindigkeitssensors für eine Driftkorrektur zu ermitteln. Eine Offset-Korrektur ist nicht vorgesehen.

Bei invasiven Messmethoden wirkt sich vor allem die Unterbrechung der Signalübertragung zwischen dem RDS und der analogen Signalschnittstelle nachteilig aus. Dies schließt aufgrund von Sicherheitsanforderungen an die RDS-Signalkette eine Fehlererkennung während der Fahrt aus.

Es ist somit die Aufgabe der Erfindung, ein Verfahren und eine Vorrichtung bereitzustellen, mittels der Signalfehler in der Signalübertragungskette zwischen Sensor und analoger Signalschnittstelle unterbrechungsfrei erkannt und kompensiert werden können.

Die Aufgabe wird gelöst durch die unabhängigen Ansprüche. Erfindungsgemäß wird ein Verfahren zur Offset-Kompensation von Sensorsignalen mittels einer Offsetkompensationsvorrichtung bereitgestellt, wobei die Offsetkompensationsvorrichtung ein Schieberegister mit Elementen der Anzahl N, einen Mittelwertbildner und einen Tiefpassfilter umfasst und wobei im Verfahren folgende Schritte durchgeführt werden:
- Speichern von Sensorwerten in dem Schieberegister,
- Bilden der Differenz zwischen dem ersten Element des Schieberegisters und des letzten Elements des Schieberegisters,
- Ermitteln von mehreren Mittelwerten, wobei folgende Schritte durchgeführt werden:
   a) Starten der Mittelwertbildung durch den Mittelwertbildner, wenn die Differenz größer ist als ein Schwellwert S,
   b) Stoppen der Mittelwertbildung durch den Mittelwertbildner, wenn die Differenz kleiner ist als der Schwellwert -S,
- Ermitteln des niedrigsten Signalpegels mittels des Tiefpassfilters basierend auf den Mittelwerten,
- Ermitteln des Offsets durch Bilden der Differenz zwischen dem niedrigsten Signalpegel und einem Referenzstromwert,
- Korrigieren der Sensorwerte mittels des ermittelten Offsets.

Es wird somit eine nichtinvasive Messmethode bereitgestellt, welche folgende Vorteile hat:
1. Durch die rein digitale Implementierung ist die Methode sehr robust und zeigt ein vorhersehbares Verhalten.
2. Die Implementierung wird mit dem Technologiefortschritt günstiger (Skalierungseffekte).
3. Es gibt eine Qualitätsverbesserung durch eine hohe Testabdeckung in der Produktion, da Digitaltests automatisiert ablaufen.
4. Die Kompensation von Toleranzen analoger Schaltungsteile.

Auch wenn das Signal und die Abtastzeitpunkte unkorreliert sind, ist bei gut gewählter Abtastrate garantiert, dass die berechnete Amplitude nach Nutzung des Schieberegisters der Signalamplitude entspricht. Die berechnete Amplitude wird durch die Differenzbildung zwischen dem ersten und letzten Element des Schieberegisters ermittelt.

Der eingesetzte Tiefpassfilter wird vorteilhaft eingesetzt, um den Einfluss einer einzelnen Mittelwertbildung abzumildern. Wird die Mittelwertbildung mehrfach erfolgreich durchgeführt, steht am Ausgang des Tiefpassfilters der Wert des niedrigsten Signalpegels.

In einer bevorzugten Weiterbildung der Erfindung wird der Referenzstromwert des zu untersuchenden Signals auf 7mA festgelegt. Dies ist insbesondere bei kommerziell genutzten Varianten von RDS relevant, die einen Stromfluss von 7mA als Grundpegel (für gepulste oder Dreilevel Sensoren) oder als Niedriglevel (für Standard Zweilevel Sensoren) aufweisen. Die Abweichung zwischen gemessenem Wert und Referenzstromwert ergibt den bestimmten Offset.

In einer bevorzugten Weiterbildung der Erfindung wird die Anzahl N des Schieberegisters so gewählt, dass mindestens alle Abtastwerte einer Flanke gespeichert werden können und N größer als zwei ist.

**In** einer alternativen Weiterbildung der Erfindung wird das Fenster des Mittelwertbildners derart gewählt, dass es länger ist als die Phasen mit dem niedrigsten Level im Protokoll, so dass die Mittelwertbildung im Anschluss an das Protokoll erfolgt. Bei einem Protokoll löst jeder magnetische Pol eine komplette Folge von Sensorpulsen aus. Diese Pulse haben eine definierte Länge und beinhalten weitere Informationen zum Sensorstatus. Ein Protokollsensor sendet somit definierte Pulsfolge. Die Pausen zwischen den Protokollen werden durch die Radgeschwindigkeiten bestimmt.

**In** einer bevorzugten Weiterbildung der Erfindung wird das Fenster des Mittelwertbildners derart gewählt, dass es kürzer ist als die Phasen mit dem niedrigsten Level im Protokoll, so dass die Mittelwertbildung mehrmals während eines Protokolls abgeschlossen wird. Somit wird ein robusteres und genaueres Ergebnis erreicht. Es gehen möglichst wenig übertragene Protokolle verloren, da sich der Korrekturwert deutlich schneller einstellen kann.

In einer bevorzugten Weiterbildung der Erfindung werden folgende Schritte durchgeführt:
- Versorgen mindestens eines Sensors mit einer Spannung durch eine Auswerteschaltung,
- Modulieren eines Sensorstroms durch den Sensor,
- Messen und Auswerten des Sensorstroms durch die Auswerteschaltung.

In einer bevorzugten Weiterbildung der Erfindung hat die Auswerteschaltung einen High-Side-Pfad und einen Low-Side-Pfad und es werden folgende Schritte durchgeführt
- Parallele Nutzung des High-Side-Pfads und des Low-Side-Pfads,
- Bestimmen der aktuellen Offsetwerte für den High-Side-Pfad und den Low-Side-Pfad.

Durch die parallele Nutzung des High-Side-Pfades und des Low-Side-Pfades und der Bestimmung der aktuellen Offsetwerte kann die Fehlerart ermittelt werden und/oder eine Lokalisation des Fehlers erfolgen. Die Erfassung und Wandlung des RDS-Signals mittels Analog-Digital-Converter (ADC) ist kennzeichnend für nichtinvasive Messmethoden. Nach geeigneter Aufbereitung des RDS-Signals (z.B. Tiefpassfilterung) wird dieses bevorzugt mit einem ADC (je nach Schaltungsarchitektur an der positiven Versorgung = high-side, oder der negativen Versorgung = low-side, angebunden) oder wahlweise mit zwei ADCs (an high-side und low-side) in eine digitale Signalform mit hinreichend genauer Auflösung überführt. Untersuchungen der Signaleigenschaften erfolgen durch die Verarbeitung der digitalisierten RDS Signalwerte.

In einer bevorzugten Weiterbildung der Erfindung wird eine konstruktive Überlagerung der ermittelten Offsetwerte für den High-Side-Pfad und den Low-Side-Pfad durchgeführt und dadurch ein verbesserter Vektor gebildet. Für diese Überlagerung werden bevorzugt jeweils zwei Bit mit dem gleichen Index aus LVL_HS[x] und LVL_LS[x] betrachtet. Das Ausgangsbit LVL[x] wird auf 1 gesetzt, wenn LVL_HS[x] oder LVL_LS[x] eine steigende Signalflanke zeigen. Das Ausgangsbit LVL[x] wird auf 0 gesetzt, wenn LVL_HS[x] oder LVL_LS[x] eine fallende Signalflanke zeigen. Damit wird erreicht, dass im Fehlerfall ein Auswertepfad für die Signaldetektion ausreicht, der die Signalflanke zuerst erkennt. Insbesondere bevorzugt wird zuerst die Offsetkompensation getrennt für den High-Side und den Low-Side Pfad durchgeführt und anschließend werden die beiden Teilergebnisse überlagert.

In einer bevorzugten Weiterbildung der Erfindung wird zusätzlich eine Hysterese an den einzelnen Detektionsschwellen durchgeführt, was die Robustheit weiter vorteilhaft verbessert.

In einer bevorzugten Weiterbildung der Erfindung werden die Schwellwerte möglichst ideal zwischen den spezifischen Signalpegeln der Sensoren festgelegt.

Die Aufgabe wird zudem gelöst durch eine Offsetkompensationsvorrichtung zum Kompensieren von Offsets in Sensorsignalen, wobei die
Offsetkompensationsvorrichtung ein Schieberegister und einen Mittelwertbildner aufweist. Bevorzugt führt die Offsetkompensationsvorrichtung zumindest Teile des zuvor beschriebenen Verfahrens durch.

Weiterhin wird die Aufgabe gelöst durch eine Sensorvorrichtung umfassend die Offsetkompensationsvorrichtung, die Auswerteeinrichtung sowie mindestens einen Sensor. In einer bevorzugten Weiterbildung ist der Sensor ein Raddrehzahlsensor für ein elektrisches Bremssystem. Die Sensorvorrichtung ist dazu ausgebildet, das zuvor beschriebene Verfahren auszuführen.

Weitere bevorzugte Ausführungsformen ergeben sich aus den Unteransprüchen und der nachfolgenden Beschreibung von Ausführungsbeispielen anhand von Figuren.

Es zeigen in schematischer Darstellung
- Fig. 1: den Anschluss eines Raddrehzahlsensors im Fahrzeug und die Auswerteschaltung (Stand der Technik);
- Fig. 2: den Stromverlauf eines Radsensors mit Protokoll mit drei verschiedenen Strompegeln (Stand der Technik);
- Fig. 3: ein Schemabild der Auswerteschaltung (Stand der Technik)
- Fig. 4: den Stromverlauf eines Radsensors wie in Fig. 2 jedoch mit Offset-Fehler (Stand der Technik)
- Fig. 5: die Auswerteschaltung wie Fig. 3 jedoch mit zusätzlichem Block für die Offsetkompensation gemäß der Erfindung
- Fig. 6: eine Beispieluntersuchung des Einflusses der Abtastrate des ADCs und der Schieberegisterlänge N für eine fallende Flanke gemäß der Erfindung
- Fig. 7: die Auswerteschaltung bei einer parallelen Nutzung von HS und LS Pfad gemäß der Erfindung.

Die Erfindung beschreibt einen Algorithmus zur Bestimmung und zur Kalibrierung von Offsets in RDS-Signalen, im Rahmen einer nichtinvasiven Messmethode.

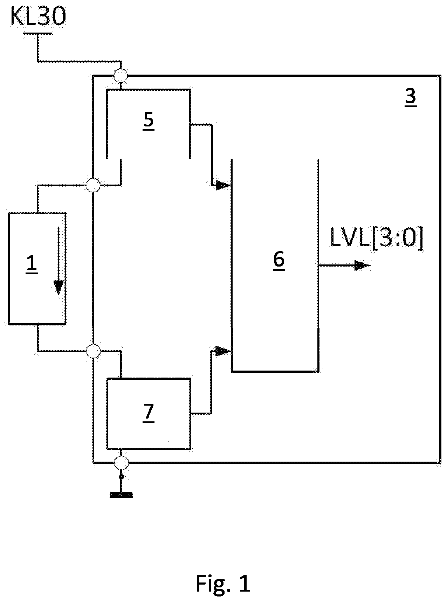

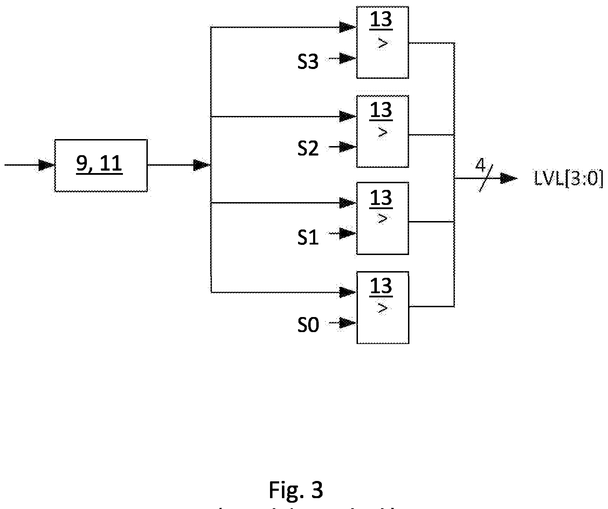

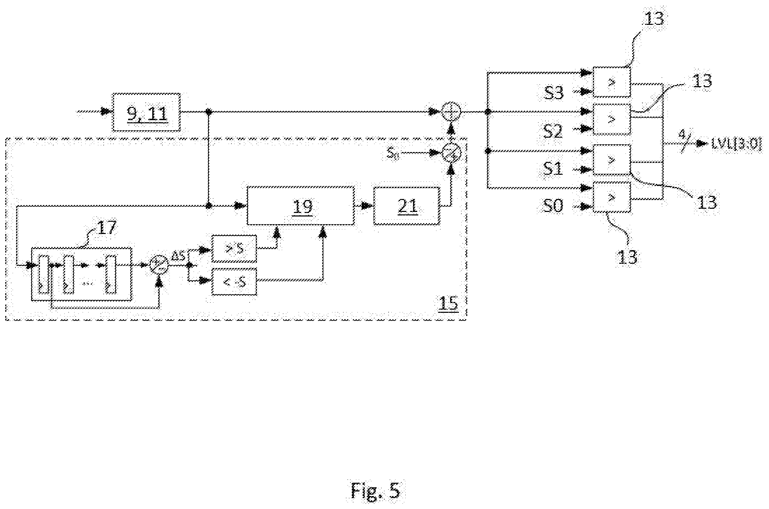

Viele Sensoren im Kraftfahrzug werden über den Kabelbaum an eine Auswerteelektronik angeschlossen. Fig. 1 zeigt prinzipiell den Anschluss eines Raddrehzahlsensors 1 im Fahrzeug mit einer Auswerteschaltung 3, welche eine Auswertelogik 4 aufweist. Der Sensor 1 wird über die Auswerteschaltung (das Auswert-IC) 3 über den Anschluss an eine Stromversorgung KL30 mit Spannung versorgt. Dabei fliest der Sensorstrom sowohl durch einen High-Side Treiber (HS) 5 und einen Low-Side Treiber (LS) 7 im Auswerte ASIC 3. Im Betrieb moduliert der Sensor 1 den Sensorstrom. Dieser Strom kann im integrierten Schaltkreis (Auswerteschaltung 3) mit dem High-Side Analog-Digital-Wandler (HS ADC) 9 und/oder dem Low-Side Analog-Digital-Wandler (LS ADC) 11 (siehe Fig. 3 und 5) gemessen und ausgewertet werden.

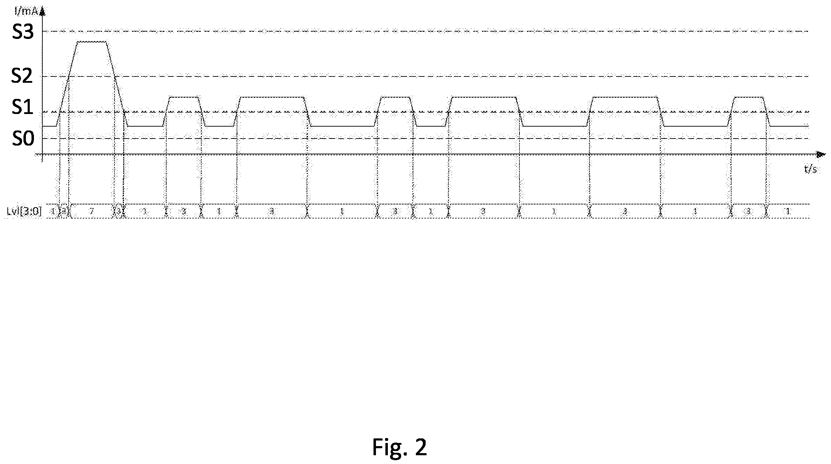

Bei den Radsensoren im Kraftfahrzeug sind unterschiedliche Datenprotokolle im Einsatz. Diese Daten werden über eine Stromschnittstelle im Fahrzeug von den Rädern zum elektronischen Steuergerät übertragen. Fig. 2 zeigt den Stromverlauf des Radsensors 1 mit Protokoll mit drei verschiedenen Strompegeln. Ferner sind in Fig. 2 vier Schwellwerte S0, S1, S2, S3 gezeigt.

Fig. 3 zeigt ein Schemabild der Auswerteschaltung 3. Das Radsensorsignal wird zunächst mit einem Analog-Digital-Wandler (ADC) 9, 11 digital gewandelt und das Ergebnis mit verschiedenen Schwellwerten S0 bis S3 verglichen. Die Schwellwerte S0 bis S3 sind so gewählt, dass sie möglichst ideal zwischen den spezifizierten Signalpegeln der Sensoren 1 liegen. Jeder Vergleicher 13 setzt den digitalen Ausgang auf 1, sobald der Wert des ADCs 9, 11 größer ist als die untersuchte Schwelle S0-S3. Kombiniert man alle Ausgangssignale dieser Vergleicher zu einem digitalen Signalvektor, so erhält man den Vektor LVL[3:0], der für die weitere Signalerkennung verwendet wird. Siehe dazu auch Fig. 1 und 2, wo der Vektor ebenfalls dargestellt ist.

Im Fahrzeugbetrieb kann es jedoch eine Reihe von Sensorfehlern geben:
- Offset-Fehler in positiver und negativer Richtung
- Amplitudenfehler (Sensoramplitude zu hoch oder zu niedrig)

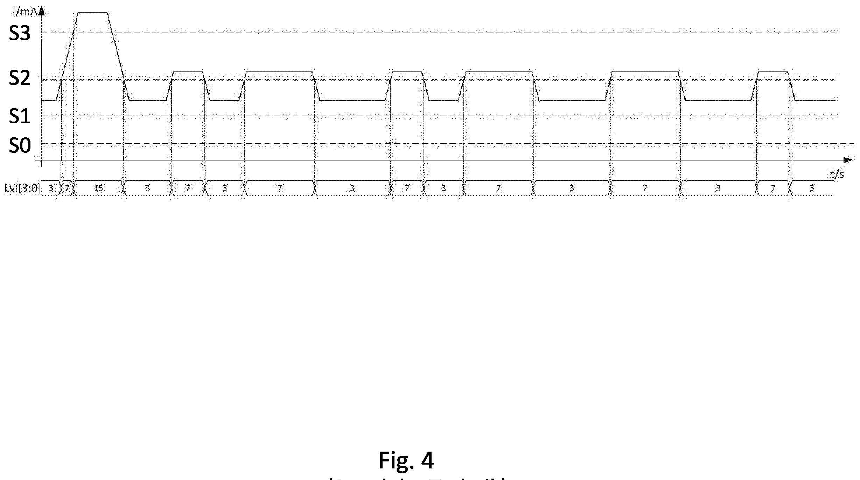

In Fig. 4 ist der Signalverlauf für einen Sensor 1 dargestellt, bei dem alle Strompegel um einen festen Betrag angeboten sind. Dieser Fehler wird als Offset-Fehler bezeichnet.

Die Signalerkennung zur Bildung des Vektors LVL[3:0] scheitert, da die Schwelle S1 vom Sensorsignal nicht mehr unterschritten wird. Zusätzlich wird Schwelle S3 überschritten, was für eine korrekte Protokollerkennung des Sensors 1 nicht vorgesehen ist. In diesem Fall fällt das Sensorsignal im Fahrzeug aus und steht für die Regelfunktionen in sicherheitskritischen Steuergeräten nicht mehr zur Verfügung. Man erkennt jedoch in Fig. 4, dass die Sensorinformation im Empfangssignal noch vollständig enthalten ist, lediglich der Erkennungsbereich ist verschoben.

Mit dem folgenden Detektionsverfahren, einer Offset-Kompensation, ist eine Signaldetektion auch noch bei vorhandenen Sensorfehlern möglich, um eine erhöhte Verfügbarkeit der Radsensorsignale im Fahrzeug zu erreichen. Zunächst wird nur einer der beiden Detektionspfade, z. B. der High-Side Pfad 5 betrachtet.

Wie in Fig. 5 dargestellt, wird ein zusätzlicher Block 15 für die Offsetkompensation in die Auswerteschaltung 3 eingeführt. Ein Schieberegister 17 der Länge N speichert die AD-Wandler Werte. Die Länge N des Schieberegisters 17 ist so gewählt, dass mindestens alle Abtastwerte einer Flanke gespeichert werden können und N > 2 ist.

Aus dem ersten und letzten Element des Schieberegisters 17 wird eine Differenz ΔS gebildet. Ist die Differenz am Ausgang des Schieberegisters 17 positiv und größer als ein Flankensteilheitswert (Schwellwert) S, deutet dies auf eine steigende Flanke hin; ist sie negativ und kleiner als ein Flankensteilheitswert (Schwellwert) -S, wird eine fallende Flanke erkannt.

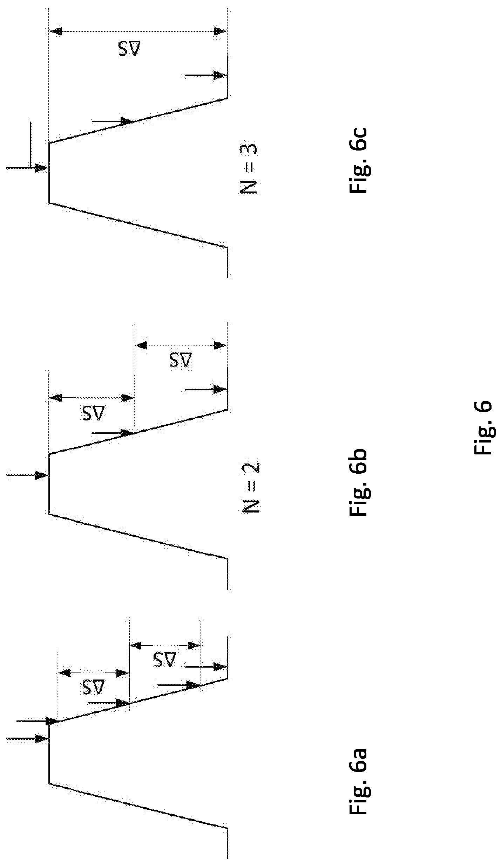

Die Definition der Länge N des Schiebregisters 17 wird anhand von Fig. 6a-c erläutert. In den Figuren 6a bis 6c wird für eine fallende Flanke der Einfluss der Abtastrate des ADCs und der Schieberegisterlänge N untersucht.

In Fig. 6a ist N = 2 und die Abtastrate relativ zur Flankensteilheit hoch. Die Abtastzeitpunkte sind mit Pfeilen im Signalverlauf angegeben. In diesem Fall wird der Wert ΔS kleiner, je höher die Abtastrate des ADCs 9, 11 ansteigt. Je höher die Abtastrate, desto länger sollte das Schieberegister 17 gewählt werden.

In Fig. 6b wurde eine niedrigere Abtastrate verwendet. Die zeitliche Korrelation zwischen dem Sensorsignal und den Abtastzeitpunkten ist jedoch unbekannt bzw. zufällig. In diesem Fall kann es vorkommen, dass das Signal genau in der Mitte der Flanke abgetastet wird. Dadurch wird ΔS maximal halb so groß wie die Signalamplitude.

In Fig. 6c ist nun der Fall mit N = 3 dargestellt. Die Abtastrate ist so gewählt, dass die gesamte Flanke zwischen zwei Abtastwerten erfolgen kann. Obwohl das Signal und die Abtastzeitpunkte weiterhin unkorreliert sind, ist damit garantiert, dass die Amplitude ΔS der Signalamplitude entspricht. Dies ist das bestmögliche Ergebnis und der Grund für die Einführung des Schieberegisters 17.

Zusätzlich zum Schieberegister 17 wird ein Mittelwertbildner 19 für die AD-Wandler Werte implementiert (siehe Fig. 5). Dieser Mittelwertbildner 19 läuft nicht ständig, sondern wird durch den Schieberegisterausgang gesteuert. Ist die Ausgangsdifferenz größer als eine Schwelle S, wird die Mittelwertbildung gestartet. Ist die Ausgangsdifferenz kleiner als eine Schwelle -S, wird die Mittelwertbildung gestoppt. Wird eine Mittelwertbildung nach genau M Eingangselementen erfolgreich beendet, wird das Ergebnis an das folgende Tiefpassfilter 21 übergeben, an dessen Ausgang sich der niedrigste Pegel im Signalverlauf einstellt.

Zusammen mit dem Schieberegister führt dies im System zu folgendem Verhalten: Ist das Eingangssignal vom ADC konstant, dann füllt sich das Schieberegister 17 mit nahezu gleichen Werten, bei der Differenzbildung am Ausgang wird keine der beiden Schwellen S oder -S über- bzw. unterschritten und der Status des Mittelwertbildners 19 ändert sich nicht.

Hat das Eingangssignal eine fallende Flanke, dann wird das Schieberegister 17 zuerst mit größeren und anschließend mit kleineren Werten gefüllt. Die Differenz am Ausgang ist maximal, sobald die gesamte Flanke im Schieberegister 17 gespeichert ist. Während einer fallenden Flanke kann es vorkommen, dass die Schwelle S mehrfach überschritten wird. In diesem Fall wird der Mittelwertbildner 19 jeweils neu gestartet und alle bisherigen Teilergebnisse verworfen. Erst am Ende der fallenden Flanke wird die Schwelle S nicht mehr überschritten und die Mittelwertbildung läuft weiter. Dadurch wird erreicht, dass die Mittelwertbildung erst am Ende einer fallenden Flanke beginnt. Dieses Verfahren hat den Vorteil, dass man nicht wissen muss, wann eine Flanke beginnt oder endet. Man findet das Ende der Flanke automatisch, da der Mittelwertbildner 19 nicht mehr unterbrochen wird.

Wird keine weitere Flanke (fallend oder steigend) während der Mittelwertbildung erkannt, dann wird die Mittelwertbildung von M Werten beendet und das Ergebnis an das folgende Tiefpassfilter 21 übergeben. Tritt während der Operation jedoch eine steigende Flanke auf, dann wird das Schieberegister 17 zuerst mit niedrigen und anschließend mit höheren Werten gefüllt. In diesem Fall wird die Schwelle -S unterschritten und die Mittelwertbildung sofort beendet. Alle Zwischenergebnisse werden verworfen und nichts an das Tiefpassfilter 21 übergeben.

Mit dieser Methode wird erreicht, dass die Mittelwertbildung genau am Ende einer fallenden Flanke startet und durchlaufen wird, sofern sich das Eingangssignal danach nicht mehr ändert. Das folgende Tiefpassfilter 21 wird implementiert, um den Einfluss einer einzelnen Mittelwertbildung abzumildern. Wird die Mittelwertbildung mehrfach erfolgreich durchgeführt, steht am Ausgang des Tiefpassfilters 21 der Wert des niedrigsten Signalpegels.

Bildet man eine Differenz mit dem erwarteten Level für die tiefste Schwelle des Sensors 1, erhält man die Abweichung des Sensorsignals gegenüber diesem Erwartungswert. Diese Abweichung wird für die Korrektur der AD-Wandler Werte für die Sensorauswertung verwendet. Die Sensorauswertung funktioniert dadurch auch bei einem vorhandenen Offset-Fehler.

Der festgestellte Offset-Fehler wird zusätzlich als Überwachungsparameter für die Software verwendet. Wird der Wert zu groß, dann kann die Systemsoftware darauf reagieren und den Fahrer oder die Werkstatt über den Fehler informieren.

Bei der Auslegung des Mittelwertbildners sind folgende Randbedingungen zu beachten:
Je länger der Wert M des Mittelwertbildners 19 gewählt wird, desto robuster und genauer wird das ermittelte Ergebnis. Auf der anderen Seite muss jedoch auch die vorliegende Signalform betrachtet werden. Im Fall des Sensorprotokolls in Fig. 2 kann man entscheiden, ob man den Mittelwertbildner 19 so kurz wählt, dass die Mittelwertbildung auch mehrmals während eines Protokolls abgeschlossen wird. In diesem Fall gehen möglichst wenig übertragene Protokolle verloren, da sich der Korrekturwert deutlich schneller einstellen kann.

Wählt man die Mittelwertbildung länger als die Phasen mit dem niedrigsten Level im Protokoll, dann kann die Mittelwertbildung erst im Anschluss an das Protokoll erfolgen. In diesem Fall dauert es länger, bis der korrekte Korrekturwert berechnet wird. Beide Realisierungen sind möglich.

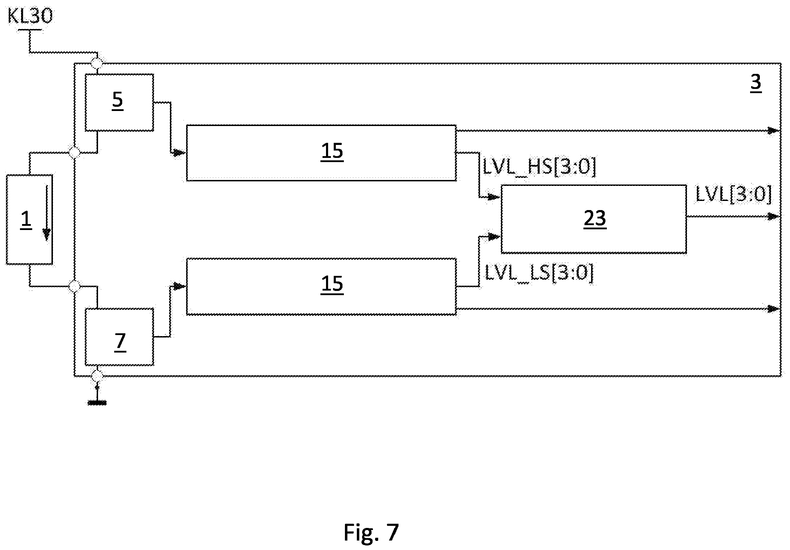

Nutzt man, wie in Fig. 7 dargestellt, im Auswerte-IC 3 den High-Side und den Low-Side Pfad 5, 7 parallel, erhält man während des Betriebs kontinuierlich den aktuell ermittelten Offsetwert für High-Side bzw. Slow-Side Pfad 5, 7. Diese Werte können zur Bestimmung der Fehlerart und der Lokalisation eingesetzt werden. Zusätzlich ist es möglich, die ermittelten Daten LVL_HS und LVL_LS konstruktiv zu überlagern, so dass ein verbesserter Vektor LVL gebildet wird. Die Überlagerung kann in einer Überlagerungseinheit 23 stattfinden.

Für diese Überlagerung werden jeweils zwei Bit mit dem gleichen Index aus LVL_HS[x] und LVL_LS[x] betrachtet. Das Ausgangsbit LVL[x] wird auf 1 gesetzt, wenn LVL_HS[x] oder LVL_LS[x] eine steigende Signalflanke zeigen. Das Ausgangsbit LVL[x] wird auf 0 gesetzt, wenn LVL_HS[x] oder LVL_LS[x] eine fallende Signalflanke zeigen.

Damit wird erreicht, dass im Fehlerfall ein Auswertepfad für die Signaldetektion ausreicht, der die Signalflanke zuerst erkennt. Eine zusätzliche Hysterese an den einzelnen Detektionsschwellen verbessert die Robustheit weiter.

### Bezugszeichenliste:

- 1: Raddrehzahlsensor
- 3: Auswerteschaltung
- 4: Auswertelogik
- 5: High-Side Treiber
- 7: Low-Side Treiber
- 9: High-Side Analog-Digital-Wandler (HS ADC)
- 11: Low-Side Analog-Digital-Wandler (LS ADC)
- 13: Vergleicher
- 15: Block für Offset-Kompensation (Offsetkompensationsvorrichtung)
- 17: Schieberegister
- 19: Mittelwertbildner
- 21: Tiefpassfilter
- 23: Überlagerungseinheit
- S0, S1, S2, S3: Schwellwerte
- KL30: Anschluss an Stromversorgung

## Patentansprüche

1. Verfahren zur Offset-Kompensation von Sensorsignalen mittels einer Offsetkompensationsvorrichtung (15), wobei die Offsetkompensationsvorrichtung ein Schieberegister (17) mit Elementen der Anzahl N, einen Mittelwertbildner (19) und einen Tiefpassfilter (21) umfasst und wobei im Verfahren folgende Schritte durchgeführt werden:
- Speichern von Sensorwerten in dem Schieberegister (17),
- Bilden der Differenz zwischen dem ersten Element des Schieberegisters (17) und des letzten Elements des Schieberegisters (17),
- Ermitteln von mehreren Mittelwerten, wobei folgende Schritte durchgeführt werden:
a) Starten der Mittelwertbildung durch den Mittelwertbildner (19), wenn die Differenz größer ist als ein Schwellwert S,
b) Stoppen der Mittelwertbildung durch den Mittelwertbildner (19), wenn die Differenz kleiner ist als der Schwellwert -S,
- Ermitteln des niedrigsten Signalpegels mittels des Tiefpassfilters (21) basierend auf den Mittelwerten,
- Ermitteln des Offsets durch Bilden der Differenz zwischen dem niedrigsten Signalpegel und einem Referenzstromwert,
- Korrigieren der Sensorwerte mittels des ermittelten Offsets.

2. Verfahren nach Anspruch 1, wobei die Anzahl N des Schieberegisters (17) so gewählt wird, dass mindestens alle Abtastwerte einer Flanke gespeichert werden können und N größer als zwei ist.

3. Verfahren nach einem der vorherigen Ansprüche, wobei das Fenster des Mittelwertbildners (19) derart gewählt wird, dass es länger ist als die Phasen mit dem niedrigsten Level im Protokoll, so dass die Mittelwertbildung erst im Anschluss an das Protokoll erfolgt.

4. Verfahren nach einem der vorherigen Ansprüche, wobei das Fenster des Mittelwertbildners (19) derart gewählt wird, dass es kürzer ist als die Phasen mit dem niedrigsten Level im Protokoll, so dass die Mittelwertbildung mehrmals während eines Protokolls abgeschlossen wird.

5. Verfahren nach einem der vorherigen Ansprüche, folgende Schritte durchgeführt werden:
- Versorgen mindestens eines Sensors (1) mit einer Spannung durch eine Auswerteschaltung (3),
- Modulieren eines Sensorstroms durch den Sensor (1),
- Messen und Auswerten des Sensorstroms durch die Auswerteschaltung (3).

6. Verfahren nach Anspruch 5, wobei die Auswerteschaltung (3) einen High-Side-Pfad (5) und einen Low-Side-Pfad (7) hat und folgende Schritte durchgeführt werden
- Parallele Nutzung des High-Side-Pfads (5) und des Low-Side-Pfads (7)
- Bestimmen der aktuellen Offsetwerte für den High-Side-Pfad (5) und den Low-Side-Pfad (7).

7. Verfahren nach einem der vorherigen Ansprüche, wobei folgender Schritt durchgeführt wird
- Konstruktive Überlagerung der ermittelten Offsetwerte für den High-Side-Pfad (5) und den Low-Side-Pfad (7) und Bildung eines Vektors.

8. Offsetkompensationsvorrichtung (15) zum Kompensieren von Offsets in Sensorsignalen, **dadurch gekennzeichnet, dass**
die Offsetkompensationsvorrichtung (15) ein Schieberegister (17) und einen Mittelwertbilder (19) aufweist und zur Ausführung des Verfahrens nach einem der Ansprüche 1 bis 4 ausgebildet ist.

9. Sensorvorrichtung umfassend die Offsetkompensationsvorrichtung (15) nach Anspruch 8, eine Auswerteeinrichtung (13) sowie mindestens einen Sensor (1), wobei die Sensorvorrichtung dazu ausgebildet ist, das Verfahren nach einem der Ansprüche 1 bis 7 auszuführen.

10. Sensorvorrichtung nach Anspruch 9, wobei der Sensor (1) ein Raddrehzahlsensor für ein elektrisches Bremssystem ist.

## Claims

1. Method for offset compensation for sensor signals by means of an offset compensation device (15), wherein the offset compensation device comprises a shift register (17) containing elements in the number N, an averaging unit (19) and a low pass filter (21), and wherein the method involves the following steps being carried out:
- storing sensor values in the shift register (17),
- calculating the difference between the first element of the shift register (17) and the last element of the shift register (17),
- determining multiple mean values, the following steps being carried out:
a) starting the averaging by the averaging unit (19) if the difference is greater than a threshold value S,
b) stopping the averaging by the averaging unit (19) if the difference is less than the threshold value -S,
- determining the lowest signal level by means of the low pass filter (21) based on the mean values,
- determining the offset by calculating the difference between the lowest signal level and a reference current value,
- correcting the sensor values by means of the determined offset.

2. Method according to Claim 1, wherein the number N for the shift register (17) is chosen such that at least all samples of an edge can be stored and N is greater than two.

3. Method according to either of the preceding claims, wherein the window of the averaging unit (19) is chosen such that it is longer than the phases having the lowest level in the protocol, with the result that the averaging takes place only after the protocol.

4. Method according to one of the preceding claims, wherein the window of the averaging unit (19) is chosen such that it is shorter than the phases having the lowest level in the protocol, with the result that the averaging is completed multiple times during a protocol.

5. Method according to one of the preceding claims, wherein the following steps are carried out:
- supplying at least one sensor (1) with a voltage by way of an evaluation circuit (3),
- modulating a sensor current by way of the sensor (1),
- measuring and evaluating the sensor current by way of the evaluation circuit (3).

6. Method according to Claim 5, wherein the evaluation circuit (3) has a high-side path (5) and a low-side path (7) and the following steps are carried out
- using the high-side path (5) and the low-side path (7) in parallel
- determining the present offset values for the high-side path (5) and the low-side path (7).

7. Method according to any one of the preceding claims, wherein the following step is carried out
- constructively overlaying the determined offset values for the high-side path (5) and the low-side path (7) and forming a vector.

8. Offset compensation device (15) for compensating for offsets in sensor signals, **characterized in that**
the offset compensation device (15) has a shift register (17) and an averaging unit (19) and is designed to perform the method according to one of Claims 1 to 4.

9. Sensor device comprising the offset compensation device (15) according to Claim 8, an evaluation device (13) and at least one sensor (1), wherein the sensor device is designed to perform the method according to one of Claims 1 to 7.

10. Sensor device according to Claim 9, wherein the sensor (1) is a wheel speed sensor for an electric braking system.

## Revendications

1. Procédé permettant de compenser un décalage de signaux de capteur au moyen d'un dispositif de compensation de décalage (15), dans lequel le dispositif de compensation de décalage comprend un registre à décalage (17) avec des éléments du nombre N, un générateur de valeur moyenne (19) et un filtre passe-bas (21), et dans lequel les étapes suivantes sont exécutées dans le procédé, consistant à :
- mémoriser des valeurs de capteur dans le registre à décalage (17),
- former la différence entre le premier élément du registre à décalage (17) et le dernier élément du registre à décalage (17),
- déterminer plusieurs valeurs moyennes, dans lequel les étapes suivantes sont exécutées, consistant à :
A) commencer le calcul de moyenne par le générateur de valeur moyenne (19) si la différence est supérieure à une valeur seuil S,
B) arrêter le calcul de moyenne par le générateur de valeur moyenne (19) si la différence est inférieure à la valeur seuil -S,
- déterminer le niveau de signal le plus bas au moyen du filtre passe-bas (21) sur la base des valeurs moyennes,
- déterminer le décalage en formant la différence entre le niveau de signal le plus bas et une valeur de courant de référence,
- corriger les valeurs de capteur en utilisant le décalage déterminé.

2. Procédé selon la revendication 1, dans lequel le nombre N du registre à décalage (17) est sélectionné de telle sorte qu'au moins toutes les valeurs d'échantillonnage d'un flanc peuvent être mémorisées, et N est supérieur à deux.

3. Procédé selon l'une quelconque des revendications précédentes, dans lequel la fenêtre du générateur de valeur moyenne (19) est sélectionnée de façon à être plus longue que les phases ayant le niveau le plus bas dans le protocole, de sorte que le calcul de moyenne n'ait lieu qu'après le protocole.

4. Procédé selon l'une quelconque des revendications précédentes, dans lequel la fenêtre du générateur de valeur moyenne (19) est sélectionnée de façon à être plus courte que les phases ayant le niveau le plus bas dans le protocole, de sorte que le calcul de moyenne soit réalisé plusieurs fois au cours d'un protocole.

5. Procédé selon l'une quelconque des revendications précédentes, dans lequel les étapes suivantes sont exécutées, consistant à :
- alimenter en tension au moins un capteur (1) par un circuit d'évaluation (3),
- moduler un courant de capteur à travers le capteur (1),
- mesurer et évaluer le courant de capteur par le circuit d'évaluation (3).

6. Procédé selon la revendication 5, dans lequel le circuit d'évaluation (3) présente un trajet côté haut (5) et un trajet côté bas (7), et les étapes suivantes sont exécutées, consistant à
- utiliser en parallèle le chemin côté haut (5) et le chemin côté bas (7),
- déterminer les valeurs de décalage actuelles pour le trajet côté haut (5) et le trajet côté bas (7).

7. Procédé selon l'une quelconque des revendications précédentes, dans lequel l'étape suivante est exécutée, consistant à
- superposer de manière constructive les valeurs de décalage déterminées pour le trajet côté haut (5) et le trajet côté bas (7) et former un vecteur.

8. Dispositif de compensation de décalage (15) permettant de compenser des décalages dans des signaux de capteur, **caractérisé en ce que** le dispositif de compensation de décalage (15) comprend un registre à décalage (17) et un générateur de valeur moyenne (19) et est réalisé pour exécuter le procédé selon l'une quelconque des revendications 1 à 4.

9. Dispositif capteur comprenant le dispositif de compensation de décalage (15) selon la revendication 8, un dispositif d'évaluation (13) ainsi qu'au moins un capteur (1), le dispositif capteur étant réalisé pour exécuter le procédé selon l'une quelconque des revendications 1 à 7.

10. Dispositif capteur selon la revendication 9, dans lequel le capteur (1) est un capteur de vitesse de rotation de roue pour un système de freinage électrique.
